Europäisches Patentamt

European Patent Office

Office européen des brevets

(19)

(11) Numéro de publication : **0 235 753 B1**

(12) ## FASCICULE DE BREVET EUROPEEN

(45) Date de publication du fascicule du brevet :
15.01.92 Bulletin 92/03

(51) Int. Cl.⁵ : **G02B 6/44**

(21) Numéro de dépôt : **87102753.8**

(22) Date de dépôt : **26.02.87**

(54) **Procédé et installation de fabrication d'un tube extrude muni d'au moins une fibre optique.**

(30) Priorité : **27.02.86 FR 8602740**

(43) Date de publication de la demande :
**09.09.87 Bulletin 87/37**

(45) Mention de la délivrance du brevet :
**15.01.92 Bulletin 92/03**

(84) Etats contractants désignés :
**BE CH DE FR GB IT LI NL SE**

(56) Documents cités :
**EP-A- 0 168 278
US-A- 4 153 332
US-A- 4 218 735
US-A- 4 446 686**

(73) Titulaire : **ALCATEL CABLE
30, rue des Chasses
F-92111 Clichy Cédex (FR)**

(72) Inventeur : **Pouilly, Serge
251, Avenue Jean Jaurès
F-69007 Lyon (FR)**

(74) Mandataire : **Weinmiller, Jürgen et al
Lennéstrasse 9 Postfach 24
W-8133 Feldafing (DE)**

EP 0 235 753 B1

## Description

La présente invention concerne un procédé et une installation de fabrication d'un tube extrudé muni d'au moins une fibre optique, un tel tube ou plusieurs de ces tubes étant ultérieurement câblés entre eux et avec d'autres éléments pour constituer un câble à fibres optiques.

Un tube extrudé d'un câble à fibres présente la particularité d'avoir un diamètre intérieur plus grand que le diamètre extérieur de la fibre, ou plus grand que le diamètre du cercle circonscrit aux fibres lorsqu'il y a plusieurs fibres dans le tube, de telle sorte que la ou les fibres puissent se déplacer librement par rapport au tube.

De plus, il est généralement nécessaire que la longueur des fibres soit supérieure à celle du tube pour qu'elles ne soient pas soumises à des efforts de traction lorsque le câble est étiré.

On connait, notamment par ce document FR-A-2 280 911, un procédé de fabrication d'un tel tube permettant d'obtenir une surlongueur de fibres, procédé dans lequel on extrude le tube autour des fibres, on tire le tube en aval de l'extrudeuse par l'intermédiaire d'un dispositif à chenilles, on tire le tube et les fibres logées dans celui-ci en aval du dispositif à chenilles par l'intermédiaire d'un cabestan-tracteur , avec une vitesse de défilement supérieure à celle donnée par le dispositif à chenilles pour allonger élastiquement le tube mais pas les fibres qui sont libres dans le tube, le relâchement du tube en aval du cabestan-tracteur provoquant un retrait de ce tube et donc une surlongueur de fibres dans le tube.

Cette surlongueur a en général une valeur très faible, de l'ordre de quelques millièmes jusqu'à 1% environ de la longueur du tube, et elle est donc incompatible avec la stabilité des vitesses du dispositif à chenilles et du cabestan-tracteur qui présentent en général des variations aléatoires de quelques pour cent.

De ce fait, la surlongueur est mal maitrisée et il est alors nécessaire, avant de poursuivre la fabrication, de pratiquer un test permettant de connaître cette surlongueur et de modifier en conséquence les paramètres de fonctionnement de la ligne comme par exemple la vitesse de rotation du cabestan-tracteur.

Ce test, qui représente une perte de temps non négligeable, s'effectue en dehors de l'installation de fabrication en découpant les premiers mètres du tube fabriqué puis en comparant la longueur du tube et des fibres. Les premiers mètres du tube fabriqués sont ainsi perdus. De plus, aucun test supplémentaire n'est possible au cours de la fabrication et en conséquence, si une anomalie de fabrication intervient après le test de départ, celle-ci ne sera pas relevée et le rejet de la totalité du tube fabriqué est à prévoir.

Le but de la présente invention est de remplacer le test effectué en début de fabrication par un contrôle permanent de la surlongueur permettant, à l'aide d'un traitement de l'information, de piloter le rapport entre la vitesse du dispositif à chenilles et celle du cabestan-tracteur, de telle sorte que la surlongueur de fibres dans un tube soit maintenue constante.

La présente invention a pour objet un procédé de fabrication d'un tube extrudé muni d'au moins une fibre optique, consistant à extruder le tube autour de la ou des fibres, à tirer le tube et la ou les fibres par l'intermédiaire d'un dispositif de traction à chenilles puis d'un cabestan-tracteur, à réaliser un allongement élastique du seul tube extrudé en établissant une différence de vitesse entre le dispositif à chenilles et le cabestan-tracteur, le relâchement de ce tube à la sortie du cabestan-tracteur entraînant une surlongueur de fibres, caractérisé en ce que l'on mesure la vitesse de défilement de la ou des fibres en amont de l'opération d'extrusion et la vitesse de défilement du tube en aval du cabestan-tracteur, puis l'on compare le rapport de ces deux vitesses à un rapport prédéterminé, le résultat de cette comparaison étant utilisé pour piloter la vitesse du dispositif à chenilles par rapport à celle du cabestan-tracteur ou la vitesse de rotation du cabestan-tracteur par rapport à la vitesse de la chenille, afin de maintenir à la fois le rapport entre ces deux vitesses et la surlongueur de fibres constants.

La présente invention a également pour objet une installation de fabrication permettant la mise en oeuvre du procédé et comportant au moins et successivement, un ou plusieurs dérouleurs de fibres, une extrudeuse, un bac de refroidissement, un dispositif de traction à chenilles, un cabestan-tracteur et une recette du tube rempli d'une ou de plusieurs fibres et des moyens pour établir une différence de vitesse entre la vitesse de rotation du cabestan-tracteur et la vitesse du dispositif de traction à chenilles, caractérisée en ce qu'elle comporte, en amont de l'extrudeuse, une première roue codeuse mesurant la vitesse de défilement d'une ou de plusieurs fibres à leur entrée dans l'extrudeuse, et en aval du cabestan-tracteur, une deuxième roue codeuse (11A) mesurant la vitesse de défilement du tube, les mesures de vitesses étant traitées par un microprocesseur pour piloter la vitesse du dispositif à chenilles par rapport à celle du cabestan-tracteur, ou la vitesse de rotation du cabestan-tracteur par rapport à la vitesse de la chenille, afin de maintenir à la fois le rapport entre ces deux vitesses et la surlongueur de fibres constants.

Il est décrit ci-après, à titre d'exemple et en référence aux dessins annexés, le procédé et l'installation de l'invention concernant un tube rempli d'une seule fibre.

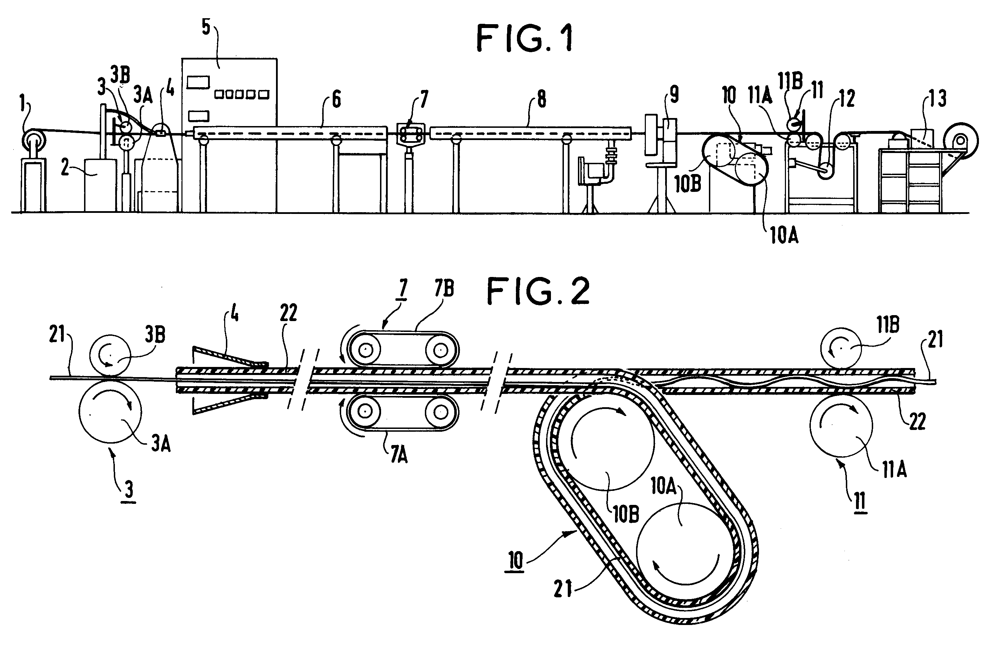

Pour plus de clarté, l'installation complète est décrite dans la figure 1 puis le procédé dans la figure 2.

Dans la figure 1 représentant l'installation, on voit successivement et de gauche à droite, un dérouleur de fibres 1, un matériel d'injection 2, un codeur optique 3, une extrudeuse 4, une armoire 5 de commande et de contrôle de la ligne, un premier bac de refroidissement 6, un dispositif de traction à chenilles 7 représenté plus en détail en figure 2, un deuxième bac de refroidissement 8, un dispositif de contrôle 9 du diamètre du tube, un cabestan-tracteur 10, un autre codeur optique 11, un pantin de régulation 12 et une recette 13.

Le dérouleur de fibre 1 peut être libre ou motorisé et contrôlé par un pantin.

Le codeur optique 3 comporte une roue codeuse 3A et un galet-presseur 3B.

Le cabestan-tracteur est avantageusement constitué d'un tambour lisse 10B et de quatre roues à gorges 10A indépendantes pour constituer quatre boucles de tirage.

Le codeur optique 11 comporte une roue codeuse 11A et un galet-presseur 11B.

Le pantin 12 règle la tension du tube 22 et participe à l'asservissement de la vitesse de rotation de la recette 13.

Dans la figure 2, il est représenté successivement et de gauche à droite, le codeur optique 3 constitué de sa roue codeuse 3A et de son galet-presseur 3B, une fibre optique 21 traversant le codeur optique 3, l'extrudeuse 4, le dispositif de traction 7 composé de deux chenilles 7A, 7B tirant le tube 22 qui sort de l'extrudeuse 4 en enveloppant la fibre optique 21, le cabestan-tracteur 10 tirant le tube et la fibre, puis enfin le codeur optique 11 constitué de sa roue codeuse 11A et son galet-presseur 11B.

La surlongueur de fibre est obtenue et contrôlée de la manière suivante :

Les enroulements du cabestan-tracteur 10 bloquant la fibre par rapport au tube, ce cabestan-tracteur tire alors simultanément sur la fibre et sur le tube.

En amont du cabestan, le tube traverse le dispositif à chenilles 7 selon une vitesse de défilement inférieure à la vitesse de défilement donnée par le cabestan-tracteur. Le tube est donc étiré entre le dispositif à chenilles 7 et le cabestan-tracteur 10.

En revanche, la fibre est libre par rapport au tube, elle n'est donc pas étirée et sa vitesse de défilement est mesurée par un fréquencemètre relié à la roue codeuse 3A.

A la sortie du cabestan-tracteur, la tension sur le tube est relâchée et comme la fibre ne peut pas reculer par rapport au tube, on emmagasine plus de fibres que de tube, la vitesse de défilement du tube étant mesurée par un fréquence-mètre relié à la roue codeuse 11A.

Pour connaître la surlongueur, on compare le rapport réel des deux vitesses de défilement de la fibre et du tube à un rapport prédéterminé, et l'écart entre ces deux rapports est introduit dans un microprocesseur qui pilote en permanence la vitesse de rotation du cabestan-tracteur par rapport à la vitesse de la chenille, afin d'obtenir une surlongueur constante quelles que soient les fluctuations de fonctionnement de l'installation. Bien entendu, on peut piloter la vitesse de la chenille par rapport à celle du cabestan-tracteur, l'important étant de maintenir constant le rapport entre ces deux vitesses.

Pour le traitement de l'information, il peut être avantageusement fait appel à un fréquencemètre à double entrée, une pour la tension issue de la roue codeuse 3A, l'autre pour celle issue de la roue codeuse 11A, et comportant un dispositif ratiomètre qui effectue automatiquement le rapport des deux vitesses de défilement, ce rapport étant disponible sur une sortie numérique qui permet de l'introduire commodément dans le microprocesseur.

## Revendications

1. Procédé de fabrication d'un tube extrudé (22) muni d'au moins une fibre optique (21), consistant à extruder le tube autour de la ou des fibres, à tirer le tube et la ou les fibres par l'intermédiaire d'un dispositif de traction à chenilles (7) puis d'un cabestan-tracteur (10), à réaliser un allongement élastique du seul tube extrudé (22) en établissant une différence de vitesse entre le dispositif à chenilles (7) et le cabestan-tracteur (10), le relâchement de ce tube à la sortie du cabestan-tracteur entraînant une surlongueur de fibres, caractérisé en ce que l'on mesure la vitesse de défilement de la ou des fibres en amont de l'opération d'extrusion et la vitesse de défilement du tube en aval du cabestan-tracteur, puis l'on compare le rapport de ces deux vitesses à un rapport prédéterminé, le résultat de cette comparaison étant utilisé pour piloter la vitesse du dispositif à chenilles (7) par rapport à celle du cabestan-tracteur (10) ou la vitesse de rotation du cabestan-tracteur par rapport à la vitesse de la chenille, afin de maintenir à la fois constants le rapport entre ces deux vitesses et la surlongueur de fibres.

2. Installation de fabrication pour la mise en oeuvre du procédé selon la revendication 1, comportant au moins et successivement, un ou plusieurs dérouleurs (1) de fibres, une extrudeuse (4), un bac de refroidissement (6, 8), un dispositif de traction à chenilles (7), un cabestan-tracteur (10) et une recette (13) du tube rempli d'une ou de plusieurs fibres et des moyens pour établir une différence de vitesse entre la vitesse de rotation du cabestan-tracteur et la vitesse du dispositif de traction à chenilles, caractérisée en ce qu'elle comporte, en amont de l'extrudeuse, une première roue codeuse (3A) mesurant la vitesse de défilement d'une ou de plusieurs fibres optiques à leur entrée dans l'extrudeuse, et en aval du cabestan-tracteur, une deuxième roue codeuse (11A) mesurant la vitesse de défilement du tube, les mesures de vitesses étant traitées par un microprocesseur pour piloter la vitesse du dispositif à chenilles par rapport à celle du cabestan-tracteur, ou la vitesse de rotation du cabestan-tracteur par rapport à la vitesse de la chenille, afin de maintenir à la fois constants le rapport entre ces deux vitesses et la surlongueur de fibres.

## Patentansprüche

1. Verfahren zur Herstellung eines extrudierten Rohrs (22), das mindestens eine Lichtleitfaser (21) enthält, wobei das Verfahren darin besteht, das Rohr um die Faser(n) herum zu extrudieren, das Rohr und die Faser(n) über eine Rampenzugvorrichtung (7) und dann eine Zugwinde (10) zu ziehen, eine elastische Verlängerung nur des extrudierten Rohrs (22) dadurch zu erzielen, daß ein Geschwindigkeitsunterschied zwischen der Rampenzugvorrichtung (7) und der Zugwinde hergestellt wird, so daß das Loslassen dieses Rohrs am Ausgang der Zugwinde eine Überlänge der Fasern bewirkt, dadurch gekennzeichnet, daß man die Durchlaufgeschwindigkeit der Faser(n) vor dem Extrusions-vorgang und die Durchlaufgeschwindigkeit des Rohrs hinter der Zugwinde mißt, daß man dann das Verhältnis dieser beiden Geschwindigkeiten mit einem vorbestimmten Verhältnis vergleicht, wobei das Ergebnis dieses Vergleichs verwendet wird, um die Geschwindigkeit der Rampenzugvorrichtung (7) im Verhältnis zu der der Zugwinde (10) oder die Drehgeschwindigkeit der Zugwinde im Verhältnis zur Geschwindigkeit der Rampenzugvorrichtung zu steuern, um sowohl das Verhältnis zwischen diesen beiden Geschwindigkeiten als auch die Überlänge der Fasern konstant zu halten.

2. Herstellungseinrichtung für die Anwendung des Verfahrens nach Anspruch 1, die mindestens und nacheinander einen oder mehrere Faserabwickler (1), eine Extrudiermaschine (4), ein Abkühlgefäß (6, 8), eine Rampenzugvorrichtung (7), eine Zugwinde (10) und eine Aufnahmevorrichtung (13) für das mit einer oder mehreren Fasern gefüllte Rohr und Mittel aufweist, um einen Geschwindigkeitsunterschied zwischen der Drehgeschwindigkeit der Zugwinde und der Geschwindigkeit der Rampenzugvorrichtung herzustellen, dadurch gekennzeichnet, daß sie vor der Extrudiermaschine ein erstes Kodierrad (3A), das die Durchlaufgeschwindigkeit einer oder mehrerer Lichtleitfasern bei ihrem Eintritt in die Extrudiermaschine mißt, und hinter der Zugwinde ein zweites Kodierrad (11A) aufweist, das die Durchlaufgeschwindigkeit des Rohrs mißt, wobei die Geschwindigkeitsmessungen von einem Mikroprozessor verarbeitet werden, um die Geschwindigkeit der Rampenzugvorrichtung in Bezug auf die Geschwindigkeit der Zugwinde oder die Drehgeschwindigkeit der Zugwinde in Bezug auf die Geschwindigkeit der Rampenzugvorrichtung zu steuern, um sowohl das Verhältnis zwischen diesen beiden Geschwindigkeiten als auch die Überlänge der Fasern konstant zu halten.

## Claims

1. A method of manufacturing an extruded tube (22) provided with at least one optical fiber (21), the method consisting in extruding the tube around the, or each, fiber, in pulling the tube and the fiber(s) by means of a caterpillar track puller device (7) and then by means of a pull-off capstan (10), in elastically lengthening the extruded tube (22) only by establishing a speed difference between the caterpillar track device (7) and the pull-off capstan (10), such that releasing the tube at the outlet from the pull-off capstan gives rise to an excess length of fiber, the method being characterized in that the running speed of the fiber(s) is measured upstream from the extrusion operation, and the running speed of the tube is measured downstream from the pull-off capstan, the ratio of these two speeds then being compared with a predetermined ratio, and the result of this comparison being used to control the speed of the caterpillar track device (7) relative to the speed of the pull-off capstan (10) or the speed of rotation of the pull-off capstan relative to the speed of the caterpillar track so as to maintain both the ratio between these two speeds and the excess length of fiber constant.

2. A manufacturing installation for implementing the method of claim 1, the installation comprising at least the following in succession: one or more fiber payout means (1), an extruder (4), a cooling tank (6, 8), a caterpillar puller device (7), a pull-off capstan (10), and a receiver (13) for receiving the tube containing one or more fibers, together with means for establishing a speed difference between the speed of rotation of the pull-off capstan and the speed of the caterpillar track puller device, the installation being characterized in that it includes, upstream from the extruder, a first encoder wheel (3A) measuring the running speed of one or more optical fibers on entry into the extruder, and downstream from the pull-off capstan a second encoder wheel (11A) measuring the running speed of the tube, the speed measurements being processed by a microprocessor to control the speed of the caterpillar track device relative to that of the pull-off capstan or the speed of rotation of the pull-off capstan relative to the speed of the caterpillar track, so as to maintain both the ratio between these two speeds and the excess length of fiber constant.

# FIG.1

# FIG.2

EP 0 235 753 B1